# EUROPÄISCHE PATENTSCHRIFT

(11) **EP 3 548 242 B1**
(45) Veröffentlichungstag und Bekanntmachung des Hinweises auf die Patenterteilung: **30.12.2020**
(21) Anmeldenummer: 17803781.8
(22) Anmeldetag: 13.11.2017
(51) Int. Cl.: B29C 35/08, B29C 35/10, B29C 48/09, B29C 48/12, B29C 48/21, B29C 48/91, B32B 1/08, B32B 7/02, B32B 7/022, B32B 7/04, B32B 27/00, B32B 27/08, B32B 27/18, B32B 27/20, B32B 27/30, B32B 27/32, B29C 48/00, B29K 23/00, B29K 105/00, B29L 23/00

(54) **VERFAHREN ZUR HERSTELLUNG EINES POLYMEREN PROFILS MITTELS CHEMISCHER VERNETZUNG**
METHOD FOR PRODUCING A POLYMER PROFILE BY MEANS OF CHEMICAL CROSS-LINKING
PROCÉDÉ DE FABRICATION D'UN PROFILÉ POLYMÈRE PAR RÉTICULATION CHIMIQUE

(30) Priorität: 29.11.2016 DE 102016122984
(43) Veröffentlichungstag der Anmeldung: 09.10.2019
(73) Patentinhaber: REHAU AG + Co, 95111 Rehau (DE)
(72) Erfinder: FÖRTIG, Anton, 91056 Erlangen (DE); SONNTAG, Martin, 95030 Hof (DE); ZIEGLER, Melanie, 95445 Bayreuth (DE); BÖHM, Volker, 95234 Sparneck (DE)
(86) Internationale Anmeldenummer: PCT/EP2017/001320
(87) Internationale Veröffentlichungsnummer: WO 2018/099587

(56) Entgegenhaltungen:
- DE-A1-102010 046 715
- DE-T2- 60 121 779
- US-A1- 2008 258 350
- US-A1- 2014 151 937

## Beschreibung

Die Erfindung betrifft ein Verfahren zur Herstellung eines polymeren Profils mittels chemischer Vernetzung,
- wobei zunächst ein Kunststoffprofil aus Kunststoffmaterial mit zugesetzten Additiven gefertigt wird,
- wobei danach das Kunststoffprofil mittels einer Strahlung emittierenden Wärmequelle erwärmt wird und hierdurch die dem Kunststoffmaterial zugesetzten Additive thermisch zu Radikalen zerfallen, und
- wobei diese Radikale eine chemische Vernetzung des Kunststoffmaterials bewirken.

Bei dem polymeren Profil kann es sich insbesondere um eine langgestreckte Geometrie handeln, wie sie beispielsweise in einem Extrusionsverfahren kontinuierlich hergestellt werden kann. Bei dem polymeren Profil kann es sich im weiteren Sinne jedoch aber auch um ein auf andere Weise hergestelltes Produkt handeln, beispielsweise im Spritzguss- oder auch Blasformverfahren. Additive im Sinne der Erfindung sind insbesondere Vernetzungsinitiatoren, die für die eingangs genannte chemische Vernetzung wesentlich sind.

Insbesondere betrifft die Erfindung ein Verfahren zur Herstellung eines extrudierten, rohrförmigen Polyethlyen(PE)-Kunststoffprofils im Wege einer peroxidischen Vernetzung des Polyethylens. Derartige PE-Xa-Rohre sind im Stand der Technik sehr verbreitet im Einsatz und werden beispielsweise als Transportleitung für Heizungs- und / oder Trinkwasser in Gebäuden oder aber auch zum Transport von Fernwärme eingesetzt. Im Stand der Technik werden die PE-Xa-Rohre durch Zugabe von Peroxiden in das Polyethylen-Material und mithilfe von Wärmestrahlung im sichtbaren und infraroten Bereich, so genannten Infrarot(IR)-Strahlern, chemisch vernetzt. Hierbei werden die physikalisch-chemischen Eigenschaften des Polyethylens aufgrund der Vernetzung modifiziert. Insbesondere wird durch die chemische Vernetzung die thermische Belastbarkeit der Polyethylen-Rohre verbessert, so dass diese für Heißwasser-Anwendungen geeignet sind. Ferner wird hierdurch auch die Schlagzähigkeit und Spannungsrissbeständigkeit der Rohre erhöht.

Durch die eingebrachte Wärme werden im Vernetzungsprozess die Peroxide zu einem thermischen Zerfall gebracht, wodurch sich Radikale bilden. Diese Radikale bewirken eine chemische Vernetzung des Kunststoffmaterials (z.B. Vernetzung von Polyethylen zu PE-Xa). Als Wärmequelle werden im Stand der Technik häufig mit Quarzglas und Reflektor umgebene Heizwendeln verwendet, die in Abhängigkeit der Temperatur unterschiedlich viel Strahlung in einem weiten Wellenlängenbereich emittieren. Die Intensitätsverteilung in Abhängigkeit von der Wellenlänge wird im Wesentlichen durch das Plancksche Strahlungsgesetz beschrieben. Durch diesen kontaktlosen Energieeintrag wird der Kunststoff erwärmt und mittels der beim thermischen Zerfall der zugesetzten Peroxide entstehenden Radikale chemisch vernetzt. Essentiell für das Ergebnis der Vernetzung ist die Wahl des richtigen Wellenlängenbereiches, da ansonsten die Energie - z.B. an der äußeren Oberfläche des Kunststoffprofils - vollständig absorbiert wird. Dadurch kann einerseits die Außenoberfläche des z.B. rohrförmigen Kunststoffprofils überhitzen und geschädigt werden, während andererseits die Rohrwandinnenseite aufgrund eines zu geringen Wärmeeintrags nicht vollständig vernetzt wird. Andererseits ist es bei einer falsch gewählten Wellenlänge auch möglich, dass die Strahlung ohne Energieabgabe die Rohrwand ungehindert passiert, das Rohrmaterial also transparent in Bezug auf die eingebrachte Wellenlänge der Strahlung ist. Insgesamt wird aufgrund der im Stand der Technik erfolgenden Bestrahlung des Kunststoffs in einem leistungsabhängigen weiten Wellenlängenbereich regelmäßig ein vergleichsweise großer Anteil der Strahlung nicht absorbiert und somit in Form von Verlustwärme an die Umgebung abgegeben. Neben dem hohen Energieverlust resultiert hieraus der zusätzliche Nachteil, dass die Umgebung (Luft, Metall etc.) aktiv gekühlt werden muss. Eine optimale Prozessführung ist folglich im Stand der Technik nicht möglich.

Ein Verfahren mit den eingangs beschriebenen Merkmalen ist aus der US 2008/0258350 A1 bekannt.

Dokument DE 10 2010 046715 A1 offenbart ein Verfahren zur Herstellung eines polymeren Profils gemäß dem Oberbegriff des Anspruchs 1.

Vor diesem Hintergrund liegt der Erfindung die Aufgabe zugrunde, ein Verfahren mit den eingangs beschriebenen Merkmalen anzugeben, das einen kostengünstigen und gleichzeitig homogenen Vernetzungsvorgang ohne thermische Schädigung des Kunststoffmaterials ermöglicht.

Erfindungsgemäß wird diese Aufgabe durch die Merkmale des Patentanspruchs 1 gelöst. Das Material der Außenschicht ist im Rahmen der Erfindung vorzugsweise zumindest weitgehend transparent hinsichtlich der Strahlung der Wärmequelle. Das Kunststoffmaterial des Kunststoffprofils zeigt in der Regel nur eine geringe Absorption der von der Wärmequelle emittierten Strahlung, so dass die zugesetzten Pigmente für den Wärmeeintrag in das polymere Profil wesentlich sind. Die erfindungsgemäße Lehre führt dazu, dass in der Außenschicht aufgrund der dort niedrigeren Pigmentkonzentration nur eine vergleichsweise geringe bzw. so gut wie keine Strahlungsabsorption stattfindet und die Strahlung somit praktisch ungehindert durch diese Außenschicht hindurchtritt. Im Kunststoffprofil hingegen wird aufgrund der dort höheren Pigmentkonzentration ein großer Anteil der Strahlung absorbiert, wodurch sich dieses Profil deutlich erwärmt und somit darin die gewünschte Vernetzungsreaktion abläuft. Die Außenschicht hat nun erfindungsgemäß eine Kühlfunktion, da sie durch Wärmeleitung Wärme vom Kunststoffprofil aufnimmt und so die im Stand der Technik zu beobachtenden kritisch hohen Temperaturen an der Außenoberfläche des Kunststoffprofils verhindert. Überdies versiegelt die Außenschicht die Außenoberfläche des Kunststoffprofils, so dass diese Außenoberfläche nicht mit Umgebungsluft in Berührung kommt und ein Verbrennen von Kunststoffmaterial in diesem Bereich verhindert wird. Im Ergebnis kann ein hoher Wärmeeintrag in das Kunststoffprofil und damit eine effiziente, schnelle und kostengünstige Fertigung des polymeren Profils erfolgen, ohne dass eine Schädigung des Kunststoffprofils an dessen äußerer Oberfläche aufgrund lokal zu großer Wärmeentwicklung zu befürchten ist. Zweckmäßigerweise beträgt die Gewichtskonzentration der Pigmente in der Außenschicht weniger als 50 %, beispielsweise weniger als 20 %, insbesondere weniger als 10 %, vorzugsweise weniger als 5 % der Pigment-Gewichtskonzentration im Kunststoffmaterial des Kunststoffprofils. Gemäß einer bevorzugten Ausführungsform der Erfindung ist die Außenschicht frei von den genannten Pigmenten. Die Gewichtskonzentration der Pigmente im Kunststoffmaterial beträgt vorzugsweise mindestens 0,01 %, z.B. 0,01 - 0,8 Gew.-%, insbesondere 0,5 - 0,8 Gew.-%. Sofern mehrere verschiedene Pigmente verwendet werden, ist hier die Gesamtkonzentration an Pigmenten gemeint. Im Rahmen der Erfindung liegt es, dass zwischen Kunststoffprofil und Außenschicht keine sichtbare Phasengrenze vorliegt, weil z.B. Profil und Außenschicht im Wege einer Coextrusion praktisch gleichzeitig hergestellt und somit noch im schmelzflüssigen Zustand zusammengeführt werden. Die Pigmente können beispielsweise aus Ruß (z.B. Industrieruß) und/oder Antimon-Zinn-Oxid und/oder Indium-Zinn-Oxid und/oder Indiumoxid und/oder Antimontrioxid und/oder Antimonoxid beschichtete Glimmerpigmenten und/oder Antimon-Zinn-Oxid beschichtete Glimmerpigmenten und/oder Zinnoxid beschichtete Glimmerpigmenten und/oder Kupferhydroxidphosphat und/oder Nickeldithiolen Komplexen und/oder Lanthanhexaborid und/oder Quaterrylen Komplexen bestehen. Hierdurch kann die Absorption der von der Wärmequelle emittierten Strahlung innerhalb des Kunststoffmaterials gezielt erhöht werden. Die Schichtdicke der Außenschicht beträgt zweckmäßigerweise mindestens 0,1 mm, z.B. mindestens 1 mm, insbesondere mindestens 2 mm.

Vorzugsweise wird das Kunststoffprofil extrudiert und beispielsweise als Hohlprofil, z.B.als Rohr mit insbesondere kreisförmigem Querschnitt, ausgebildet. Zweckmäßigerweise wird das Kunststoffprofil durch kontinuierlichen Vorschub an der ortsfesten Wärmequelle vorbeigeführt und die Wärmequelle als Durchlaufofen ausgebildet. Erfindungsgemäß ist die Wärmequelle als IR-Strahler ausgebildet und die Pigmente absorbieren IR-Strahlung. IR-Strahlung meint eine Strahlung aus dem Infrarot-Spektrum mit einer Wellenlänge im Bereich von 780 nm bis 1 mm, insbesondere 780 nm bis 20 µm. IR-Strahler als Wärmequelle haben sich in der Praxis bei der Vernetzung von Kunststoffen bewährt und kommen daher auch im Rahmen der Erfindung bevorzugt zum Einsatz. Durch die ofenartige Ausbildung der Wärmequelle kann diese das zu vernetzende Kunststoffprofil vollständig umschließen, so dass ein gleichmäßiger Wärmeeintrag über den gesamten Umfang des vorzugsweise als Rohr ausgebildeten Profils möglich ist. Zweckmäßigerweise wird das polymere Profil mittels der Wärmequelle vollständig auf eine Temperatur von mindestens 140 °C, vorzugsweise mindestens 200 °C, erwärmt. Im Rahmen der Erfindung liegt es, das polymere Profil vollständig auf eine Temperatur von mindestens 210 °C, vorzugsweise mindestens 220 °C zu erwärmen. Vollständig meint in diesem Zusammenhang insbesondere, dass eine entsprechende Erwärmung über den gesamten Querschnitt des Profils hinweg erfolgt. Hierdurch wird eine vollständige thermische Zersetzung der Additive zu den Radikalen sichergestellt.

Als Additive können insbesondere Peroxide verwendet werden. Die Verwendung anderer Additive neben oder anstelle von Peroxiden liegt jedoch ebenfalls im Rahmen der Erfindung. So können beispielsweise als Additive Azoverbindungen, beispielsweise Azobisisobutyronitril verwendet werden. Als Peroxide können beispielsweise eingesetzt werden Dibenzoylperoxid, Dicumylperoxid oder Peroxide, welche eine Tertiär-Butyl-Peroxy-Gruppe aufweisen wie Hexane, Cyclohexane, Hexine, Valerate, Hexanoate, Benzoate und Carbonate. Besonders geeignet sind in diesem Zusammenhang Dialkylperoxide, Peroxyester, Diacylperoxide, Hydroperoxide, Peroxydicarbonate, Peroxyketale und zyklische Peroxide. Im Rahmen der Erfindung liegt es ferner, dass als Additive zwei oder mehr der vorgenannten Substanzen in beliebiger Kombination gemeinsam verwendet werden. Das Kunststoffmaterial, dem die Additive zugesetzt sind, enthält zweckmäßigerweise Polyethylen, wobei das Kunststoffmaterial insbesondere aus Polyethylen besteht. Die fertig hergestellte Außenschicht kann aus demselben Material bestehen wie das Kunststoffprofil, insbesondere vernetztem Polyethylen. Hierzu können dem Kunststoffmaterial der Außenschicht ebenfalls Vernetzungs-Additive zugesetzt sein, insbesondere dieselben wie dem Kunststoffmaterial des Kunststoffprofils. Es liegt jedoch auch im Rahmen der Erfindung, dass die Außenschicht bewusst aus einem anderen Material besteht als das Kunststoffprofil, z.B aus unvernetztem Polyethylen oder aus Ethylen-Vinylalkohol-Copolymer (EVOH). Die Außenschicht kann in vorteilhafter Weise neben ihrer erfindungsgemäßen Funktion eine weitere Funktion übernehmen, für die es ohnehin einer zusätzlichen Schicht bedurft hätte. So kann die Außenschicht z.B. mittels Farbpigmenten eingefärbt sein und/oder mit einer Beschriftung versehen sein. Die Außenschicht kann alternativ oder zusätzlich auch als UV-Schutz und/oder - insbesondere bei einer Ausbildung als EVOH-Schicht - als Sauerstoffsperrschicht dienen. Wie bereits erläutert, können Außenschicht und das Kunststoffprofil im Wege einer Coextrusion hergestellt werden. Zweckmäßigerweise ist die Schichtdicke des Kunststoffprofils größer als die Schichtdicke der Außenschicht.

Im Rahmen der Erfindung liegt es ferner, dass zwischen der Außenschicht und dem Kunststoffprofil mindestens eine Zwischenschicht vorgesehen sind, wobei die Gewichtskonzentration der Pigmente in dieser Zwischenschicht zweckmäßigerweise ebenfalls niedriger als im Kunststoffprofil ist. Im Rahmen der Erfindung liegt es hierbei, dass sowohl die Zwischenschicht als auch die Außenschicht frei von den Pigmenten sind. Es liegt jedoch auch im Rahmen der Erfindung, dass die Gewichtskonzentration der Pigmente in der Zwischenschicht niedriger als im Kunststoffprofil, jedoch höher als in der Außenschicht ist. Die mindestens eine Zwischenschicht kann als Kunststoff-Zwischenschicht ausgebildet sein, die z.B. im fertig hergestellten Zustand aus demselben polymeren Material wie das Kunststoffprofil besteht, beispielswesie einem vernetzten Polyethylen. Hierzu können dem Kunststoffmaterial der Kunststoff-Zwischenschicht ebenfalls Vernetzungs-Additive zugesetzt sein, insbesondere dieselben wie dem Kunststoffmaterial des Kunststoffprofils. Die Zwischenschicht kann jedoch auch aus einem anderen Material bestehen als das Kunststoffprofil, z.B. unvernetztem Polyethylen. Insbesondere kann die Zwischenschicht auch als Haftvermittlerschicht ausgebildet sein, die eine innige stoffschlüssige Verbindung zwischen Kunststoffprofil und Außenschicht sicherstellt. Als Material für die Haftvermittlerschicht kann ein Maleinsäureanhydrid (MAH), ein Methylmethacrylat (MMA) oder auch ein epoxy-modifiziertes Polyethylen oder Polypropylen zum Einsatz kommen. Denkbar sind auch Mischungen von zwei oder mehr als zwei der vorgenannten Materialien. Sofern zwei oder mehr Zwischenschichten vorgesehen sind, hat es sich als zweckmäßig erwiesen, dass die Gewichtskonzentration der Pigmente in der innersten Zwischenschicht niedriger als im Kunststoffprofil und höher als in der äußersten Zwischenschicht ist. Die mindestens eine Zwischenschicht kann mit dem Kunststoffprofil und/oder der Außenschicht coextrudiert sein, d.h. auch eine Coextrusion von drei oder mehr (z.B. vier) Schichten liegt im Rahmen der Erfindung. Durch den beschriebenen mindestens dreischichtigen Aufbau des polymeren Profils mit Kunststoffprofil, mindestens einer Zwischenschicht und einer Außenschicht ist ein abgestufter Wärmeeintrag in die einzelnen Schichten, je nach dortiger Gewichtskonzentration an Pigmenten, möglich.

Gegenstand der Erfindung ist auch ein mittels des vorstehend beschriebenen Verfahrens hergestelltes polymeres Profil. Dieses kann beispielsweise seinen Einsatz finden in Form eines Rohres, beispielsweise PE-X-Rohres, welches insbesondere als Transportleitung für Heizungs- und/oder Trinkwasser oder aber auch zum Transport von Fernwärme verwendet wird.

Insgesamt ist es mittels der erfindungsgemäßen Lehre möglich, die im Stand der Technik häufig zu beobachtende Überhitzung der äußeren Oberfläche des Kunststoffprofils bei gleichzeitig zu geringem Vernetzungsgrad im der Wärmequelle abgewandten Innenbereich des Profils zu verhindern. Sofern es sich beispielsweise - wie bereits erläutert - im Rahmen einer bevorzugten Ausführungsform der Erfindung um die Herstellung eines extrudierten Kunststoff-Rohres handelt, wird durch die beschriebene Maßnahme ein Überhitzen der Außenschicht des Rohres aufgrund deren reduzierter Pigmentkonzentration verhindert und der Wärmeeintrag hin zum Innenbereich mit höherer Pigmentkonzentration verlagert, welcher im Stand der Technik häufig unter einem zu geringen Vernetzungsgrad leidet. Dadurch kann bei einer entsprechenden Abstimmung der Schichtdicken von Außenschicht und Kunststoffprofil zueinander sowie einer geeigneten Bemessung der Konzentration an Pigmenten eine über den gesamten Rohrquerschnitt gleichmäßige Erwärmung und damit einhergehend ein homogener Zerfall der Additive und hierdurch letztendlich eine gleichmäßige Vernetzung des Kunststoffprofis über den gesamten Querschnitt erzielt werden.

Im Folgenden wird die Erfindung anhand einer lediglich ein Ausführungsbeispiel darstellenden Zeichnung erläutert. Es zeigen schematisch:
- Fig. 1:: ein erfindungsgemäßes Verfahren zur Herstellung eines polymeren Profils,
- Fig. 2:: den Schnitt A-A in Fig. 1 und
- Fig. 3-5:: der Fig. 2 entsprechende Darstellungen weiterer Ausführungsformen der Erfindung

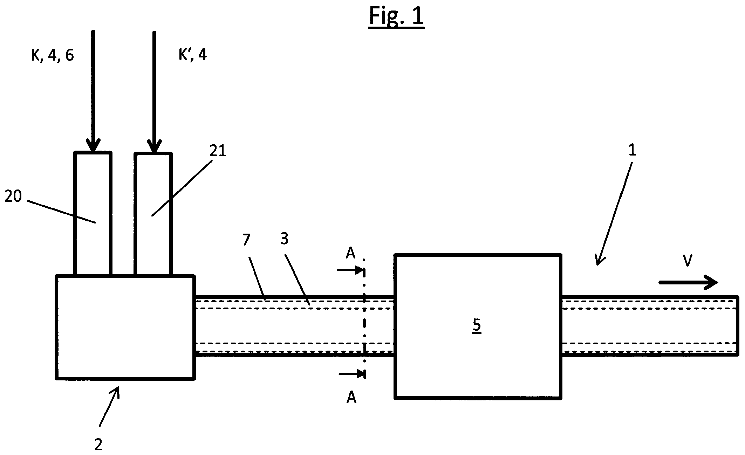

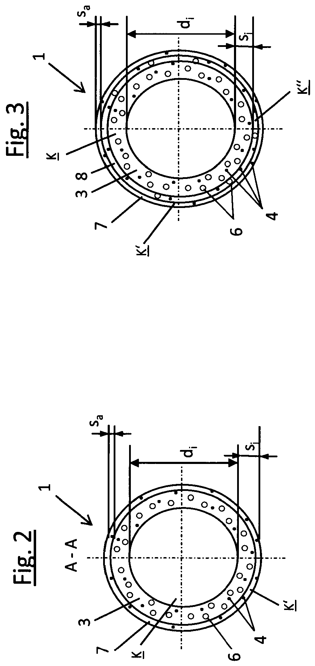

Die Fig. 1 zeigt ein Verfahren zur Herstellung eines polymeren Profils 1 mittels chemischer Vernetzung. Zunächst wird in einer Extrusionsvorrichtung 2 ein Kunststoffprofil 3 aus Kunststoffmaterial K gefertigt, wobei dem Kunststoffmaterial K Additive 4 zugesetzt sind (s. a. Fig. 2). Bei dem Kunststoffprofil 3 handelt es sich im Ausführungsbeispiel um ein geschlossenes Hohlprofil in Form eines Rohres mit kreisförmigem Querschnitt. An den Extrusionsprozess anschließend wird das Kunststoffprofil 3 mittels einer Wärmequelle 5 erwärmt. Hierdurch werden die dem Kunststoffmaterial K zugesetzten Additive 4 thermisch zersetzt und zerfallen zu Radikalen. Diese Radikale bewirken eine chemische Vernetzung des Kunststoffmaterials K. Im Ausführungsbeispiel werden als Additive 4 Peroxide eingesetzt und als Kunststoffmaterial K Polyethylen. Durch den Wärmeeintrag der Wärmequelle 5 erfolgt die gewünschte peroxidische Vernetzung des Polyethylens K zu PE-Xa. Bis hierhin entspricht die erläuterte Verfahrensweise dem Stand der Technik.

Als Wärmequelle 5 wird ein ofenförmiger IR-Strahler verwendet. Mittels des IR-Strahlers 5 wird das polymere Profil 1 vollständig, d.h. über seinen gesamten Querschnitt hinweg auf eine Temperatur von ca. 230 °C erwärmt, so dass eine vollständige thermische Zersetzung der Peroxide 4 gewährleistet ist. Es ist anhand der Fig. 1 erkennbar, dass das Kunststoffprofil 3 aufgrund des Extrusionsvorschubs V kontinuierlich durch den ortsfesten ofenförmigen IR-Strahler 5 hindurchgeführt wird. Um die Absorption der IR-Strahlung zu verbessern, sind erfindungsgemäß dem Kunststoffmaterial K neben den peroxidischen Additiven 4 zusätzlich IR-Strahlung absorbierende Pigmente 6, z.B. in Form von Industrieruß mit einem Kohlenstoffgehalt von 80 - 99,5 Gew.-%, zugesetzt. Die Gewichtskonzentration des Rußes im Kunststoffmaterial K beträgt mindestens 0,01 %. Wie einer vergleichenden Betrachtung der Fig. 1 und 2 zu entnehmen ist, wird das Kunststoffprofil 3 in der Extrusionsvorrichtung 2 zusätzlich mit einer Kunststoff-Außenschicht 7 versehen, wobei die Kunststoff-Außenschicht 7 frei von IR-Strahlung absorbierenden Pigmenten 6 ist. Die Kunststoff-Außenschicht 7 wird mit dem Kunststoffprofil 3 coextrudiert, so dass entsprechend zwei Materialströme, einer für das Kunststoffmaterial K des Kunststoffprofils 3 und einer für das Polymermaterial K' der Kunststoff-Außenschicht 7 in die Extrusionsvorrichtung 2 einlaufen. Hierbei durchläuft das mit Additiven 4 und Pigmenten 6 versetzte Polymermaterial K eine erste Extruderschneckeneinheit 20 der Extrusionsvorrichtung 2, während das Polymermaterial K' der Kunststoff-Außenschicht 7 eine zweite Extruderschneckeneinheit 21 der Extrusionsvorrichtung 2 durchläuft.

Die Fig. 2 zeigt das in Fig. 1 dargestellte polymere Extrusionsprofil 1 im Querschnitt vor dem Einlauf in den ofenförmigen IR-Strahler 5 mit dem dickeren Kunststoffprofil 3 im Inneren und der dünneren Kunststoff-Außenschicht 7. Auch hier ist erkennbar, dass dem Kunststoffmaterial K des Kunststoffprofils 3 sowohl die Additive 4 als auch die IR-Strahlung absorbierenden Pigmente 6 zugesetzt sind. Dem ebenfalls aus Polyethlyen bestehenden Polymermaterial K' der Kunststoff-Außensicht 7 sind hingegen lediglich die Additive 4 zugesetzt, ebenfalls in Form von Peroxiden, jedoch keine Pigmente 6. Hierdurch wird eine bevorzugte Erwärmung des die Innenschicht bildenden Kunststoffprofils 3 bewirkt, so dass dieses vollständig vernetzt. Die Außenschicht 7 hingegen wird aufgrund der fehlenden Pigmente 6 primär durch das erhitzte Kunststoffprofil 3 mittels Wärmeleitung erwärmt und erleidet somit keine thermische Schädigung.

In Fig. 3 ist gegenüber dem Ausführungsbeispiel gemäß Fig. 2 zwischen der Kunststoff-Außenschicht 7 und dem Kunststoffprofil 3 eine zusätzliche Kunststoff-Zwischenschicht 8 vorgesehen. In dieser Kunststoff-Zwischenschicht 8 sind ebenfalls Pigmente 6 vorhanden, jedoch ist die Gewichtskonzentration der Pigmente 6 in dieser ebenfalls aus Polyethlyenmaterial K" und peroxidischen Additiven 4 gebildeten Zwischenschicht 7 niedriger als im Kunststoffprofil 3, z.B. nur halb so hoch. Dies führt dazu, dass das innenliegende Kunststoffprofil durch die von der Wärmequelle 5 emittierten Strahlung am meisten erhitzt wird, die Zwischenschicht 8 moderat und die Außenschicht aufgrund der dort fehlenden Pigmente 6 praktisch gar nicht. Durch Wärmeleitung von innen nach außen erfolgt jedoch in allen drei Schichten 3, 8, 7 eine ausreichende Erwärmung für eine homogene Vernetzung des Polyethlyens in allen drei Schichten.

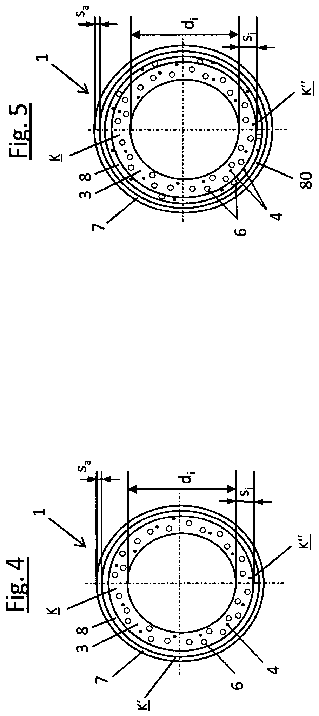

Fig. 4 zeigt in Analogie zur Fig. 3 ebenfalls einen dreischichtigen Aufbau, jedoch bestehen hier sowohl die Zwischenschicht 8 als auch die Außenschicht 7 aus einem anderem Material als das Kunststoffprofil 3. Während die Außenschicht 7 aus EVOH besteht und somit eine sehr gute Sauerstoffsperrfunktion besitzt, ist die Zwischenschicht 8 als Haftvermittlerschicht ausgebildet, die für eine sehr gute stoffschlüssige Anbindung der Außenschicht 7 an das Kunststoffprofil 3 sorgt. Die Außenschicht 7 ist ferner mit einer (nicht dargestellten) Bedruckung versehen. Als Material für die Haftvermittlerschicht 8 kann ein Maleinsäureanhydrid (MAH), ein Methylmethacrylat (MMA) oder auch ein epoxy-modifiziertes Polyethylen oder Polypropylen zum Einsatz kommen. Die Haftvermittlerschicht 8 ist im Ausführungsbeispiel sowohl mit dem Kunststoffprofil 3 als auch der Außenschicht 7 coextrudiert. Da sowohl in der Haftvermittlerschicht 8 als auch der Außenschicht kein Vernetzungsvorgang stattfindet, sind diese beiden Schichten 8, 7 frei von den Addititven 4 und auch frei von den Pigmenten 6. Erfindungsgemäß dienen beide Schichten 8, 7 wiederum als Wärmepuffer, die eine zu starke Erhitzung des Polymerprofils 3 verhindern.

Beim Ausführungsbeispiel gemäß Fig. 5 sind zwei Zwischenschichten in Form einer inneren ersten Zwischenschicht 8 und einer äußeren zweiten Zwischenschicht 80 vorgesehen. Das Kunststoffmaterial K" der inneren Zwischenschicht 8 besteht wie das Kunststoffmaterial K aus Polyethlyen und auch diese Schicht 8 enthält Vernetzungs-Additive 4 und Pigmente 6. Entsprechend besteht - in Analogie zur Fig. 3 - die fertig hergestellte innere Zwischenschicht 8 aus vernetztem Polyethylen. Die Gewichtskonzentration der Pigmente 6 in der inneren (und damit innersten) Zwischenschicht 8 ist jedoch niedriger als im Kunststoffprofil 3 und höher als in der äußeren (und damit äußersten) Zwischenschicht 80. Analog zum Ausführungsbeispiel gemäß Fig. 4 fungiert hier die äußere Zwischenschicht 80 als Haftvermittlerschicht zur wiederum aus EVOH bestehenden Außenschicht 7. Daher sind in diesem Ausführungsbeispiel sowohl die äußere Zwischenschicht 80 als auch die Außenschicht 7 jeweils frei von den Pigmenten 6 und auch frei von Vernetzungs-Additiven 4. Die beiden Zwischenschichten 8, 80 sind sowohl mit dem Kunststoffprofil 3 als auch der Außenschicht 7 coextrudiert, d.h. das Coextrusionverfahren umfasst hier vier Schichten 3, 8, 80, 7. Aufgrund der reduzierten Pigmentkonzentration in der inneren Zwischenschicht 8 kann ein abgestufter Wärmeeintrag realisiert werden, d.h. nach IR-Durchstrahlung der beiden transparenten äußeren Schichten 7, 80 wird zunächst in der inneren Zwischenschicht 8 ein kleinerer Anteil der IR-Strahlung absorbiert, während der größere Anteil der Strahlung im Kunststoffprofil 3 absorbiert wird. Dieses erwärmt jedoch hierdurch die angrenzende Schicht 8, so dass in beiden Schichten 3, 8 eine sehr gleichmäßige, homogene Vernetzung stattfindet, ohne dass hierbei die äußeren Oberflächen der Schichten 3 bzw. 8 zu stark erhitzt und damit geschädigt werden.

Die in den Ausführungsbeispielen dargestellten polymeren Profile 1 werden beispielsweise als Rohre für Heizungs- und / oder Trinkwasseranwendungen verwendet oder auch alternativ als Transportleitung für Fernwärme. Der in den Fig. 2 bis 5 dargestellte innere Durchmesser der Kunststoffprofile 1, welcher den freien Strömungsquerschnitt definiert, bewegt sich hierbei im Bereich von dᵢ = 8 bis 300 mm, insbesondere 20 bis 100 mm. Die Schichtdicke des rohrförmigen Kunststoffprofils 3 bewegt sich im Bereich sᵢ = 3 bis 20 mm, insbesondere 5 bis 10 mm, während die Schichtdicke der Außenschicht 7 sᵢ = 0,1 bis 10 mm, insbesondere 1 bis 5 mm beträgt.

## Patentansprüche

1. Verfahren zur Herstellung eines polymeren Profils (1) mittels chemischer Vernetzung,
- wobei zunächst ein Kunststoffprofil (3) aus Kunststoffmaterial (K) mit zugesetzten Additiven (4) gefertigt wird,
- wobei danach das Kunststoffprofil (3) mittels einer Strahlung emittierenden Wärmequelle (5) erwärmt wird und hierdurch die dem Kunststoffmaterial (K) zugesetzten Additive (4) thermisch zu Radikalen zerfallen, und
- wobei diese Radikale eine chemische Vernetzung des Kunststoffmaterials (K) bewirken,
**dadurch gekennzeichnet, dass** dem Kunststoffmaterial (K) neben den Additiven (4) an die Strahlung der als IR-Strahler ausgebildeten Wärmequelle (5) angepasste, IR-Strahlung absorbierende Pigmente (6) zugesetzt werden, dass das Kunststoffprofil (3) mit einer Außenschicht (7), vorzugsweise Kunststoff-Außenschicht, versehen wird, die eine niedrigere Gewichtskonzentration an Pigmenten (6) aufweist als das Kunststoffmaterial (K).

2. Verfahren nach Anspruch 1, **dadurch gekennzeichnet, dass** die Außenschicht (7) frei von den Pigmenten (6) ist.

3. Verfahren nach Anspruch 1 oder 2, **dadurch gekennzeichnet, dass** die Gewichtskonzentration der Pigmente (6) im Kunststoffmaterial (K) mindestens 0,01 % beträgt.

4. Verfahren nach einem der Ansprüche 1 bis 3, **dadurch gekennzeichnet, dass** die Schichtdicke (sₐ) der Außenschicht (7) mindestens 0,1 mm, vorzugsweise mindestens 1 mm, beträgt.

5. Verfahren nach einem der Ansprüche 1 bis 4, **dadurch gekennzeichnet, dass** das Kunststoffprofil (3) extrudiert und vorzugsweise als Hohlprofil, insbesondere als Rohr mit kreisförmigem Querschnitt, ausgebildet wird.

6. Verfahren nach einem der Ansprüche 1 bis 5, **dadurch gekennzeichnet, dass** das Kunststoffprofil (3) durch kontinuierlichen Vorschub an der ortsfesten Wärmequelle (5) vorbeigeführt und die Wärmequelle (5) als Durchlaufofen ausgebildet wird.

7. Verfahren nach einem der Ansprüche 1 bis 6, **dadurch gekennzeichnet, dass** das polymere Profil (1) mittels der Wärmequelle (5) vollständig auf eine Temperatur von mindestens 140 °C, vorzugsweise mindestens 200 °C, erwärmt wird.

8. Verfahren nach einem der Ansprüche 1 bis 7, **dadurch gekennzeichnet, dass** als Additive (4) Peroxide verwendet werden.

9. Verfahren nach einem der Ansprüche 1 bis 8, **dadurch gekennzeichnet, dass** das
Kunststoffmaterial (K) Polyethylen enthält, vorzugsweise aus Polyethylen besteht.

10. Verfahren nach einem der Ansprüche 1 bis 9, **dadurch gekennzeichnet, dass** die Außenschicht (7) mit dem Kunststoffprofil (3) coextrudiert wird.

11. Verfahren nach einem der Ansprüche 1 bis 10, **dadurch gekennzeichnet, dass** zwischen der Außenschicht (7) und dem Kunststoffprofil (3) mindestens eine Zwischenschicht (8) vorgesehen wird, wobei die Gewichtskonzentration der Pigmente (6) in dieser Zwischenschicht (8) ebenfalls niedriger als im Kunststoffprofil (3) ist.

12. Verfahren nach Anspruch 11, **dadurch gekennzeichnet, dass** zwei oder mehr Zwischenschichten vorgesehen werden, wobei die Gewichtskonzentration der Pigmente (6) in der innersten Zwischenschicht (8) niedriger als im Kunststoffprofil (3) und höher als in der äußersten Zwischenschicht (80) ist.

13. Polymeres Profil (1), hergestellt mit einem Verfahren nach einem der Ansprüche 1 bis 12.

## Claims

1. A method for producing a polymer profile (1) by means of chemical crosslinking,
- wherein initially a plastics profile (3) is produced from a plastics material (K) with added additives (4),
- wherein the plastics profile (3) is then heated by means of a radiation-emitting heat source (5) and as a result the additives (4) added to the plastics material (K) undergo thermal decomposition to form radicals, and
- wherein these radicals cause a chemical crosslinking of the plastics material (K),
**characterised in that** IR radiation-absorbing pigments (6) adapted to the radiation of the heat source (5) which is in the form of an IR lamp are added to the plastics material (K) in addition to the additives (4), and **in that** the plastics profile (3) is provided with an outer layer (7), preferably a plastics outer layer, which has a lower concentration by weight of pigments (6) than the plastics material (K).

2. The method according to claim 1, **characterised in that** the outer layer (7) is free from the pigments (6).

3. The method according to claim 1 or 2, **characterised in that** the concentration by weight of the pigments (6) in the plastics material (K) is at least 0.01%.

4. The method according to one of claims 1 to 3, **characterised in that** the layer thickness (sₐ) of the outer layer (7) is at least 0.1 mm and preferably at least 1 mm.

5. The method according to one of claims 1 to 4, **characterised in that** the plastics profile (3) is extruded and is preferably formed as a hollow profile and in particular as a tube with a circular cross-section.

6. The method according to one of claims 1 to 5, **characterised in that** the plastics profile (3) is guided past the stationary heat source (5) by continuous feed and the heat source (5) is in the form of a continuous oven.

7. The method according to one of claims 1 to 6, **characterised in that** the polymer profile (1) is heated completely by means of the heat source (5) to a temperature of at least 140°C and preferably at least 200°C.

8. The method according to one of claims 1 to 7, **characterised in that** peroxides are used as the additives (4).

9. The method according to one of claims 1 to 8, **characterised in that** the plastics material (K) contains polyethylene and preferably consists of polyethylene.

10. The method according to one of claims 1 to 9, **characterised in that** the outer layer (7) is coextruded with the plastics profile (3).

11. The method according to one of claims 1 to 10, **characterised in that** at least one intermediate layer (8) is provided between the outer layer (7) and the plastics profile (3), wherein the concentration by weight of the pigments (6) in this intermediate layer (8) is likewise lower than in the plastics profile (3).

12. The method according to claim 11, **characterised in that** two or more intermediate layers are provided, wherein the concentration by weight of the pigments (6) in the innermost intermediate layer (8) is lower than in the plastics profile (3) and higher than in the outermost intermediate layer (80).

13. A polymer profile (1), produced by a method according to one of claims 1 to 12.

## Revendications

1. Procédé de fabrication d'un profilé polymère (1) par réticulation chimique,
- dans lequel un profilé plastique (3) est d'abord fabriqué à partir de matière plastique (K) avec des additifs (4) ajoutés,
- dans lequel le profilé plastique (3) est ensuite chauffé par une source de chaleur (5) émettant un rayonnement et les additifs (4) ajoutés à la matière plastique (K) se décomposent ainsi thermiquement en radicaux, et
- dans lequel ces radicaux provoquent une réticulation chimique de la matière plastique (K),
**caractérisé en ce que,** en plus des additifs (4), des pigments (6) absorbant le rayonnement infrarouge, adaptés au rayonnement de la source de chaleur (5) réalisée sous forme de radiateur à infrarouge, sont ajoutés à la matière plastique (K), **en ce que** le profilé plastique (3) est pourvu d'une couche extérieure (7), de préférence une couche extérieure en matière plastique, qui présente une concentration pondérale de pigments (6) plus faible que la matière plastique (K).

2. Procédé selon la revendication 1, **caractérisé en ce que** la couche extérieure (7) est dépourvue des pigments (6).

3. Procédé selon la revendication 1 ou 2, **caractérisé en ce que** la concentration pondérale des pigments (6) dans la matière plastique (K) est d'au moins 0,01 %.

4. Procédé selon l'une des revendications 1 à 3, **caractérisé en ce que** l'épaisseur de couche (sₐ) de la couche extérieure (7) est d'au moins 0,1 mm, de préférence au moins 1 mm.

5. Procédé selon l'une des revendications 1 à 4, **caractérisé en ce que** le profilé plastique (3) est extrudé et de préférence réalisé sous la forme d'un profilé creux, en particulier d'un tube à section transversale circulaire.

6. Procédé selon l'une des revendications 1 à 5, **caractérisé en ce que** le profilé plastique (3) est guidé devant la source de chaleur (5) fixe par avance continue et la source de chaleur (5) est réalisée sous la forme d'un four à passage continu.

7. Procédé selon l'une des revendications 1 à 6, **caractérisé en ce que** le profilé polymère (1) est entièrement chauffé par la source de chaleur (5) à une température d'au moins 140 °C, de préférence au moins 200 °C.

8. Procédé selon l'une des revendications 1 à 7, **caractérisé en ce que** des peroxydes sont utilisés en guise d'additifs (4).

9. Procédé selon l'une des revendications 1 à 8, **caractérisé en ce que** la matière plastique (K) contient du polyéthylène, est de préférence constituée de polyéthylène.

10. Procédé selon l'une des revendications 1 à 9, **caractérisé en ce que** la couche extérieure (7) est coextrudée avec le profilé plastique (3).

11. Procédé selon l'une des revendications 1 à 10, **caractérisé en ce qu'**au moins une couche intermédiaire (8) est prévue entre la couche extérieure (7) et le profilé plastique (3), la concentration pondérale des pigments (6) dans cette couche intermédiaire (8) étant également plus faible que dans le profilé plastique (3).

12. Procédé selon la revendication 11, **caractérisé en ce que** deux couches intermédiaires ou plus sont prévues, la concentration pondérale des pigments (6) dans la couche intermédiaire (8) la plus à l'intérieur étant plus faible que dans le profilé plastique (3) et plus élevée que dans la couche intermédiaire (80) la plus à l'extérieur.

13. Profilé polymère (1), fabriqué avec un procédé selon l'une des revendications 1 à 12.
